# DEMANDE DE BREVET EUROPEEN

(11) **EP 2 455 433 A1**
(43) Date de publication de la demande: **23.05.2012**
(21) Numéro de dépôt: 11189948.0
(22) Date de dépôt: 21.11.2011
(51) Int. Cl.: C09J 7/02

(54) **Ruban de renfort adhésif**

(30) Priorité: 19.11.2010 FR 1059563
(71) Demandeur: Assaban, Daniel, 75009 Paris (FR)
(72) Inventeur: Assaban, Daniel, 75009 Paris (FR)
(74) Mandataire: Gevers France

(57) **Abrégé**

La présente invention porte sur un ruban de renfort comprenant un support (2) en un matériau souple et en forme de ruban, caractérisé par le fait que des éléments de renfort (5) sont disposés sur le support, les éléments de renfort étant aptes à rigidifier le support transversalement, et qu'une pellicule (4) d'un matériau adhésif, sensible à la pression, est appliquée sur une face du support (2),

Le ruban trouve application dans de nombreux domaines dont le domaine médical en tant qu'attelle.

## Description

La présente invention concerne le domaine des rubans de renfort.

Un ruban de renfort est constitué d'un matériau souple tel qu'un matériau textile ou un film plastique souple et éventuellement élastique, revêtu éventuellement sur une face d'un produit adhésif qui est généralement du type sensible à la pression. Le ruban se présente couramment sous la forme d'un rouleau.

Les applications des rubans de renfort notamment adhésifs sont variées et bien connues dans les domaines aussi différents que domestique, industriel y compris l'agriculture et médical.

Il est connu par ailleurs dans le domaine médical des attelles dont la fonction est de contenir provisoirement un membre ou une articulation. Les attelles sont de différentes tailles et formes suivant le membre ou la partie du corps à immobiliser : bras, jambe, doigt, etc. Elles peuvent être rigides mais elles présentent le plus souvent une certaine flexibilité.

On utilise également, éventuellement, des renforts semblables à des attelles pour maintenir ensemble les deux parties d'une pièce cassée ou bien que l'on souhaite simplement assembler comme dans le cas d'une greffe botanique.

Cependant la manipulation des différentes parties et le maintien d'un assemblage, telles que la mise en place d'un lien tout en tenant les éléments de l'assemblage et ceux des renforts, ne sont pas toujours aisés.

Le présent déposant s'est fixé comme objectif de réaliser un produit qui soit à la fois simple à manipuler et qui présente l'avantage d'assurer un renforcement de type attelle.

C'est ainsi que l'invention porte sur un ruban de renfort comprenant un support en un matériau souple et en forme de ruban, caractérisé par le fait que des éléments de renfort sont disposés sur le support, les éléments de renfort étant aptes à rigidifier le support dans le sens transversal par rapport au ruban, un matériau adhésif sensible à la pression étant appliqué sur une face du support.

L'invention, en associant les éléments de renfort à un support souple, permet un renforcement à la fois efficace et d'une grande simplicité de mise en oeuvre.

Le ruban de renfort adhésif, selon l'invention présente notamment des éléments de renfort en forme de baguettes disposées transversalement par rapport au support et distantes les unes des autres. Ces baguettes sont avantageusement réalisées dans un matériau qui leur donne une certaine flexibilité pour permettre une adaptation du renfort à la forme de la pièce ou du membre sur lequel il est appliqué sans le blesser.

Le matériau souple du support est un matériau textile ou un film plastique, élastique ou non, et selon un mode de réalisation il est constitué d'au moins deux couches de matériau souple. Dans ce dernier cas les éléments de renfort sont disposés préférentiellement entre deux desdites couches.

Le matériau adhésif est appliqué sur le support en formant notamment une couche continue sur une face du support.

Le ruban de renfort est conditionné en rouleau ou sous forme de plaquette.

Le ruban de renfort, adhésif, de l'invention trouve une utilisation avantageuse comme pansement pour la contention d'un membre ou d'une articulation mais en raison de sa structure il peut être destiné à de nombreux autres usages dès qu'il s'agit d'immobiliser deux pièces l'une par rapport à l'autre.

D'autres caractéristiques et avantages ressortiront de la description qui suit de modes de réalisation du produit selon l'invention en référence aux dessins annexés sur lesquels :
La figure 1 représente un ruban de renfort adhésif avec des éléments de renforts conformes à un mode de réalisation de l'invention.
La figure 2 représente un second mode de réalisation du ruban de renfort.

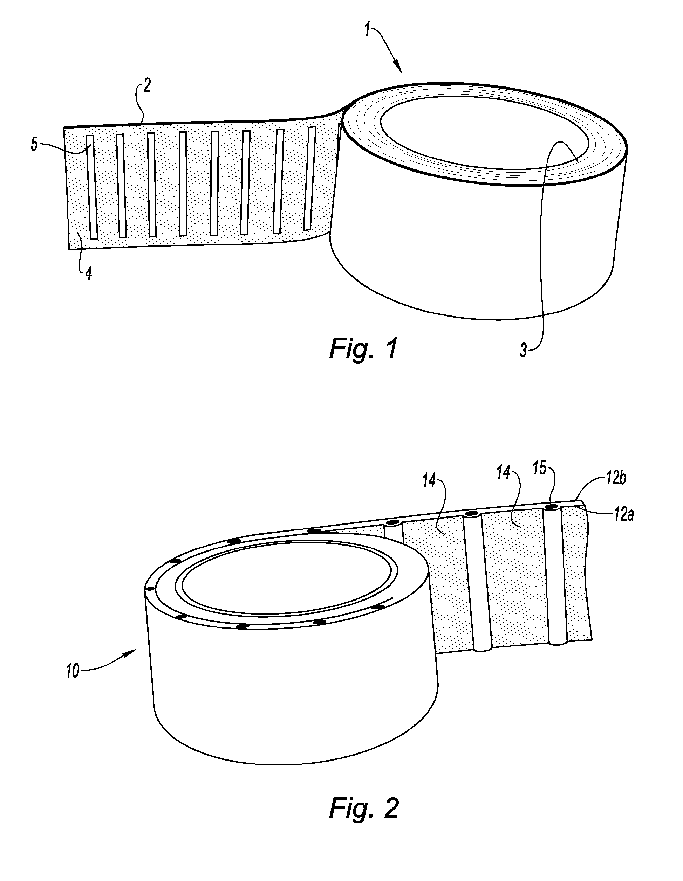

Le ruban adhésif 1 de la figure 1 comprend un support 2. Le support est en forme de bande continue, enroulée autour d'un mandrin rigide 3. Il est constitué en un matériau souple et résistant à la fois tel qu'un matériau textile, tissé ou non tissé, à base de coton ou de toute autre matière fibreuse, cellulosique ou synthétique, papier par exemple. Il peut s'agir aussi d'un matériau se présentant sous la forme d'un film continu ; il peut être extensible ou non, élastique ou non.

Dans cet exemple une pellicule de matière adhésive 4 recouvre la face interne du support 2. Cette pellicule est de préférence continue et est constituée d'une matière adhésive sensible à la pression.

Conformément à l'invention, on a disposé des éléments de renfort 5 sur la face interne du support. Ces éléments sont ici collés sur le support par l'intermédiaire de la pellicule de matière adhésive 4. Leur écartement est déterminé par la destination du produit.

Les éléments de renfort sont en forme de baguettes ou de baleines et sont disposés transversalement par rapport à la bande support. Le matériau constituant les baguettes est choisi en fonction de l'application à laquelle est destiné le ruban. Il peut s'agir de baguettes en bois, en métal ou en plastique. Les baguettes peuvent être en forme de lamelles étroites ou bien avoir une section ronde, ovale ou polygonale. La forme et la rigidité sont également choisies en fonction de l'application et de la résistance au pliage ou à la déformation de l'objet sur lequel le ruban est enroulé et dont on souhaite renforcer la tenue.

La figure 2 montre une variante de réalisation du ruban de renfort 10. Dans ce cas les baguettes 15 sont intégrées à la structure du support 12 qui est par exemple formé de deux couches 12a, 12b de matériau souple, liées l'une à l'autre, cousues ou collées par exemple. Une pellicule 14 de matière adhésive recouvre ici l'une des faces du support 12.

On comprend de la description qui précède que ce produit peut être utilisé dans de nombreuses applications, les dimensions, matériaux et propriétés mécaniques étant adaptées à l'usage de destination.

Une application dans le domaine médical est celle d'une attelle pour immobiliser une articulation par exemple, lors d'une entorse ou une luxation, en substitution d'un plâtre ou temporairement avant la pose du plâtre. Le support du ruban peut aussi être une bande textile souple, tricotée extensible ou non. Celle-ci peut être stérile et maintenue en place par un ruban adhésif rapporté. Il s'applique aussi sur une luxation, une entorse ou une fracture, accompagnée d'une lésion de la peau.

Le produit trouve une autre application dans le domaine agricole pour assurer la tenue d'une branche, d'une tige ou d'un tronc cassé, fendu ou plié, le temps qu'il se cicatrise.

Plus généralement, le produit peut être utilisé pour assurer la continuité de tout objet quelle que soit sa forme, sa taille et la matière dont il est constitué, par exemple pour assurer la réparation d'un tuyau d'un mât, d'un jouet, etc.

Le ruban étant pourvu d'une couche, continue ou non, de matière adhésive, il peut être utilisé seul. Il en est de même lorsqu'un moyen d'attache mécanique lui est associé, tel que par exemple deux éléments d'attache comprenant une pluralité de crochets souples, éventuellement avec des boucles, coopérant entre eux lorsqu'on les dispose l'un contre l'autre, voir par exemple les attaches de la marque Velcro ®.

## Revendications

1. Ruban de renfort comprenant un support (2, 12) en un matériau souple et en forme de ruban, **caractérisé par le fait que** des éléments de renfort (5, 15) sont disposés sur le support, les éléments de renfort étant aptes à rigidifier le support transversalement, et qu'une pellicule (4, 14) d'un matériau adhésif sensible à la pression est appliquée sur une face du support (2, 12).

2. Ruban de renfort selon la revendication précédente, les éléments de renfort (5, 15) étant en forme de baguettes disposées transversalement par rapport au support et distantes les unes des autres.

3. Ruban de renfort selon la revendication précédente dont les baguettes sont flexibles.

4. Ruban de renfort selon l'une des revendications précédentes dont le matériau souple est un matériau textile ou un film plastique, élastique ou non.

5. Ruban de renfort selon la revendication précédente dont le support (12) est formé d'au moins deux couches de matériau souple, les éléments de renfort étant disposés entre deux desdites couches.

6. Ruban de renfort selon l'une des revendications précédentes conditionné en rouleau ou sous forme de plaquette.

7. Ruban de renfort selon la revendication 1 dont le matériau adhésif forme une pellicule continue sur une face du support.

8. Utilisation du ruban de renfort selon l'une des revendications précédentes comme pansement pour la contention d'un membre ou d'une articulation.

9. Utilisation du ruban de renfort selon l'une des revendications 1 à 7 pour immobiliser deux pièces l'une par rapport à l'autre.
